# EUROPEAN PATENT APPLICATION

(11) **EP 2 033 610 A2**
(43) Date of publication of application: **11.03.2009**
(21) Application number: 08163479.2
(22) Date of filing: 02.09.2008
(51) Int. Cl.: A61G 7/08

(54) **Transport system including a drive unit**

(30) Priority: 06.09.2007 DK 200701276; 22.08.2008 DK 200801144
(71) Applicant: Holdingselskabet MKR Finans ApS, 7100 Vejle (DK)
(72) Inventor: Raun, Knud, 7100, Vejle (DK)
(74) Representative: Gregersen, Niels Henrik

(57) **Abstract**

The present invention concerns a transport system including at least one drive unit and at least one, preferably a plurality of transporting units, and a drive unit with motor for use in connection with transporting units with one ore more freely movable wheels, where the drive unit has at least one drive wheel. The drive unit and the transport unit are provided with a corresponding coupling system and the at least one drive wheel of the drive unit is disposed under the transport unit, preferably close to or under the centre of the transport unit.

By such a transport system is achieved the great advantage that the drive wheels operate under the transport unit, whereby far the most advantages of the freely movable wheels of the transport unit are maintained, and thereby also an optimal ability of manoeuvring the transport unit into position. By disposing the drive wheels of the drive unit under or about under the centre of the transport unit, the drive wheels will constitute the point of rotation of the transport unit, whereby easy control of the transport unit is achieved.

## Description

### Field of the Invention

The present invention concerns a transport system including a drive unit with motor for use in connnection with transporting units with one or more freely movable wheels, where these units are either coupled to the drive unit via a coupling system or where the drive unit is permanently mounted on a transport unit, and where the drive unit has at least one drive wheel. Furthermore, the invention concerns such a drive unit.

### Description of Prior Art

It is commonly known in hospitals and other places to use motorised auxiliary devices for transporting hospital beds as well as for moving linen trolleys and other transport vehicles. These known aids are a great relief to the staff having the task of providing transport for the beds and trolleys in question. Common to the beds and trolleys used in such places is that they normally are provided with freely movable wheels, also called swivelling wheels. When a trolley or bed is to be manoeuvred in place or in a narrow area, these swivelling wheels are clearly an advantage. However, when transporting along long passages, it is difficult to control a bed or a linen trolley. In order to keep the direction of such a trolley, it may be adapted such that the wheels at one end may be locked such that they no longer can turn about a vertical axis. In this way is also achieved a much more directionally stable driving. However, it still requires some muscle power to control the bed or the trolley which is also to be pushed or pulled manually. When the wheels are locked at one end, it is, however, space consuming and tedious to move the transport unit to the side.

There exist various towing apparatuses with motor which may be used on hospital beds, and with such apparatuses a bed may be moved without large muscular effort and other drawbacks associated with such transports. Moreover, there are systems that may be built into beds as wells as in transport vehicles, and common to the prior art systems is that they are either incorporated in the individual bed or trolley, or that the system is only suited for a certain type of bed or trolley.

For example, from US 2002/0084116 A1 is known a motor unit which via a coupling system is coupled to a bed or the like. This motor unit is provided with the drive wheels situated in the same area in which the coupling is taking place and it is thus capable of drawing the bed in a directionally stable way. However, when manoeuvring accurately in narrow passages or rooms, the movement is to take place with large turns as control is effected about the coupling at one end of the bed, and thereby the action of swivelling wheels at each corner of the bed cannot be utilised.

It is the object of the invention to indicate a transport system and a drive unit where the drive unit can be applied for transporting several types of units that are to be moved over shorter or longer distances, or permanently mounted under a transport unit, and where by using the transport system and the drive unit there is achieved the same manoeuvrability as by freely swivelling wheels..

### Description of the Invention

The invention concerns, as mentioned in the introduction, a transport system including at least one drive unit and at least one, preferably a plurality, of transport units, where the drive unit and the transport unit are either provided with a corresponding coupling system, or where the drive unit is permanently mounted on a transport unit, and where the at least one drive wheel of the drive unit is disposed under the transport unit, preferably close to or under the centre of the transport unit.

By such a transport system is achieved the great advantage that the drive wheels operate under the transport unit, whereby far the most advantages of the freely movable wheels of the transport unit are maintained, and thereby also an optimal ability of manoeuvring the transport unit into position. By disposing the drive wheels of the drive unit under or about under the centre of the transport unit, the drive wheels will constitute the point of rotation of the transport unit, and as mentioned is hereby achieved a good and not the least easy control of the transport unit. This is a great advantage compared with manual towing of transport units or for towing transport units with other prior art drive mechanisms, where the driving wheels are positioned at one end. By such towage, much more space is needed for manoeuvring, as the transport unit may only be controlled at one end and therefore cannot so easily turn around corners without requiring "wide turns".

A particularly preferred variant of the invention concerns a transport system which is constituted by a drive unit, and where the transport unit is a hospital bed, a linen trolley, a food trolley, a mail cart, a cleaning cart or another kind of rolling vehicle. Every day there are many movements and transports of beds and trolleys within the health care and eldercare systems. By a transport system according to the invention, many of these movements and transports may be performed without any appreciable load on the staff performing these tasks. Also, such a transport system may be used other places, e.g. in the industry or other places where transport vehicles are used.

In a preferred embodiment of a transport system according to the invention, the drive unit and the transport unit only include one or more drive wheels, preferably a wheel set with differential gear and one or more freely movable wheels, where the drive wheel or wheels may turn about a substantially vertical axis by an angle more than 45° and preferably at least 90°. By such a solution is achieved uncommonly great manoeuvrability as by this variant it is possible to turn up to 90° to the side from stand still. This variant is particularly suited for use in transport systems applied in areas with narrow passages. This variant is of great advantage, for example, in hotel corridors in connection with cleaning carts. By a transport system according to the invention, the cleaning staff may easily move a long cleaning cart to the side when other carts or persons are to pass. The turning is effected in principle in that the driving wheel set is rotated during stand still by 90° about a vertical axis, and hence the whole cart may be displaced right to the side by activation of the electric drive motor. Of course, it is also possible to perform turning in a traditional way, which obviously require driving a certain distance. By an instant 90° turn, the transport vehicle is not moved farther down a corridor or the like.

During usual driving, controlling a transport system occurs at the end of the transport unit in precisely the same way as by driving with a vehicle with freely swivelling wheels but for the fact that an electric motor is used here for propulsion. Instant turning to the side may be effected by actuating a handle or the like which is either mechanically connected or electrically connected to the drive unit. Such a mechanical connection may be with one or more cables turning the wheel set. An electric solution may be with a wire connecting the handle with an electric motor connected with the wheel set. Irrespectively of the way in which the wheel set is turned, the same advantageous turning is achieved, allowing the entire transport system to go transversely of the primary driving direction.

As mentioned previously, the invention also concerns a drive unit with at least one drive wheel. The drive unit may extend from one end and in under the transport unit, where at least one of the wheel or wheels provided under the transport unit is a drive wheel, and where the drive unit extends at least a length along one end of the transport unit. In this way, the pulling force/towing force from the drive wheel or wheels is transmitted to the transport vehicle at or close to its axis of rotation, and a good and reliable coupling between drive unit and transport unit may be ensured in that the coupling occurs at the end of the transport unit to be transported.

In a variant of the drive unit, at least one wheel is mounted at or close to both ends of the drive unit, where the wheel or wheels provided at the end of the transport unit are freely movable wheels, such as swivelling wheels. Thus is achieved the desired manoeuvrability as the centre of the transport unit remains the point of rotation. The drive unit may be provided with a control handle that may be adjustable in height, and where the handles also can be designed such that they may be adjusted according to the wish of the operator. On this control handle may be provided activation means in the form of buttons or levers for activating the drive unit for forward or backward driving, but the drive unit is not dependent on this control handle and may very well be designed without and with activation means that are mounted on e.g. a gable on a bed to be towed. However, there is the evident advantage of the control handle that it may also be used while moving the drive unit from one transport unit to another. Controlling a drive unit and a transport unit with swivelling wheels is effected in principle in the same way as by usual manual rolling a hospital bed or the like in that the end of the bed is displaced laterally by turning.

In yet a preferred variant of a drive unit according to the invention, this has at least one set of drive wheels at the end of the drive unit provided under the transport unit, where the wheel set is provided with an integrated differential. The differential gear may be of an electric type or a mechanical type. However, it has appeared that the use of an electric differential may be advantageous as such a differential does not take up much space and that the drive unit thus can be made with less total height and therefore be adapted to more different types of transport units. The differential gear ensures that there is always an optimal power distribution between the drive wheels, whereby control becomes easier, as the power distribution between the wheels of the wheel set is regulated when turning.

In a preferred variant, the drive unit according to the invention includes one or more drive wheels, preferably a wheel set with differential gear and one or more freely movable wheels, where the drive wheel or wheels may turn about a substantially vertical axis by an angle more than 45° and preferably at least 90°. By such a solution is achieved a solution with uncommonly great manoeuvrability as by this variant it is possible to turn up to 90° to the side from stand still. Advantages of such a solution are mentioned above.

The driving wheels may advantageously be powered by an electric motor which is supplied with energy from an accumulator provided on the drive unit, alternatively on the transport vehicle, where energy may be transmitted e.g. via coupling means. In a preferred variant of the invention, two accumulators are arranged on the drive unit close to the drive wheels under the transport unit. The self-weight of the accumulators is hereby utilised for pressing the drive wheels against the base, whereby better grip between wheels and base may be obtained.

One accumulator may advantageously be an spare accumulator which is either fully charged or which is to be charged. In that way is achieved an accumulator system with a kind of power reserve which simultaneously has an effect due to the self-weight. At the accumulators or at another point on the drive unit, a socket may advantageously be arranged to which a charger is connected for charging the accumulators. This connection may be effected manually or automatically by placing the drive unit in a charging station.

As mentioned previously, a drive unit according to the invention may be adapted to transport units with different design, where this device includes a coupling system which is particularly adapted to be coupled together with differently structured units. By this solution, the drive unit may be coupled together with many different transport units. In principle, the only requirement is that the units to be transported are provided with corresponding coupling means. It is thus possible to suffice with having one single type of drive units in e.g. a hospital, as this one type can be used for all the transports taking place at the hospital, right from moving beds with patients, food trolleys, and so on.

The coupling between drive unit and transport unit can be arranged in many different ways and can be designed according to the wish of the customer. The drive unit may e.g. be adapted with a coupling system which may be operated from the control handle, where the coupling is e.g. electromagnetic, a snap-action coupling, a hook coupling, a ball coupling, a drawbolt/draweye coupling, or similar. All these types of couplings can also be made such that they are operated directly at the coupling point. Other types of coupling systems than those mentioned here may also be used and the coupling system can be designed such that it fits many differently designed counterparts as well. For example, a drive unit may be provided with a multi-coupling fitting a plurality of different couplings on various transport units.

A variant of a drive unit is adapted such that the operator may freely choose if he/she will walk at the end of the drive unit or drive with it standing on a trailer arranged for the purpose. Such a trailer may advantageously be provided with straight-running wheels or with swivelling wheels or another suitable type of wheel and may be adapted such that it can be folded up, thus not taking up much space. This may be advantageous by transport in e.g. elevators where the transport unit and the drive unit may just fit by the length. The coupling and thereby the pivotal point between transport unit and trailer may advantageously be disposed close to the vertical axis of the control handle or, in other words, immediately at the end of the transport unit, whereby easy control is achieved.

A drive unit according to the invention may be designed with coupling members that are adjustable, either steplessly or in predetermined steps, whereby the possibility of rapid adjustment to several types of transport units is possible.

It is obvious that after realising the main features of the invention, the skilled in the art will be able to design variants that are not outrightly described in this publication. These kinds of variants are, however, considered comprised by the present invention, as they are based on the same fundamental idea as the disclosed variants.

### Short Description of the Drawing

The invention is described in more detail with reference to the drawing, wherein:
FIG. 1 shows an example of a transport system according to the invention.
FIG. 2 shows a drive unit.
FIG. 3 shows an example of a transport system with a drive unit.

### Detailed Description of the Invention

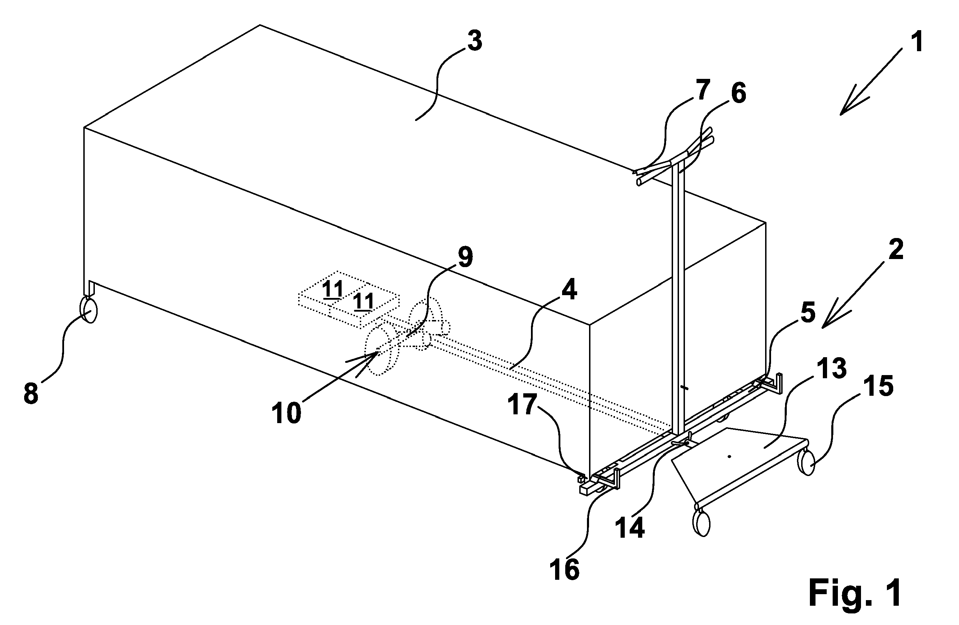

In Fig. 1 appears a transport system 1 consisting of a drive unit 2 and a transport unit 3. In the shown embodiment, the drive unit 2 consists of a forwards directed part 4 and a transverse part 5 upon which is mounted a control handle 6 with operating means 7.

The transport unit 3 is shown here as a closed trolley fitted with four swivelling wheels 8 and coupled to a drive unit 2. This transport unit 3 may, as mentioned previously, be a hospital bed, a food trolley, a linen trolley, a cleaning cart, or similar.

At the end of the forwards directed part 4 of the drive unit 2, a set of wheels 9 is mounted, driven by the two electric motors 10, and at the front of the forwards directed part 4 there is mounted two accumulator packs 11 that supply the two electric motors 10 with energy but also act as ballast on the drive wheels 9. Under the transverse part 5 at each side is fitted a swivelling wheel 12 which may rotate freely about a vertical as well as a horizontal axis. Furthermore, there is mounted a trailer 13 upon which the operator may stand while driving. This trailer 13 may be adapted with a point of rotation 14 such that it may be folded up so that the operator can walk at the end of the drive unit 2 instead. The trailer 13 is shown here with swivelling wheels 15.

On the transverse part 5 there is shown a simple coupling 16 which may be coupled together with a corresponding coupling member 17 on the transport unit 3. In principle, the shown coupling 16 functions in that the transverse part 5 is brought in contact with corresponding coupling members 17 on the transport unit 3, whereafter a locking pawl is actuated, securing the coupling.

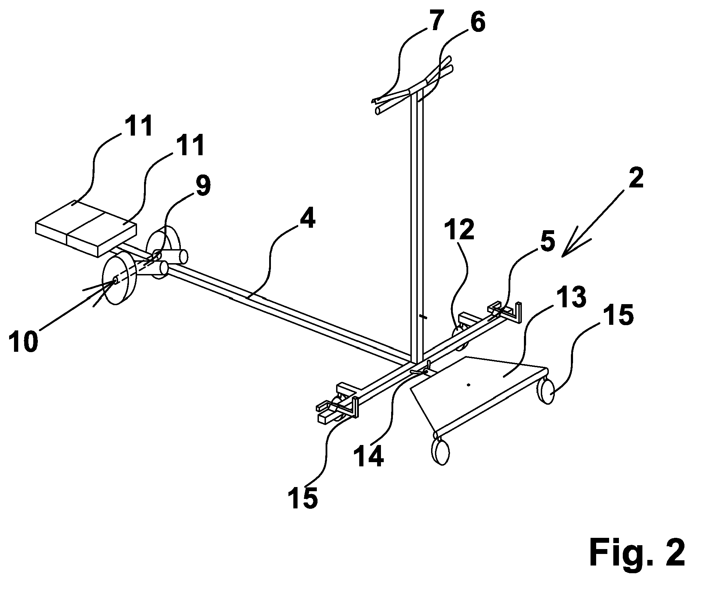

In Fig. 2 appears the same drive unit 2 as shown in Fig. 1, but shown here without a transport unit 3.

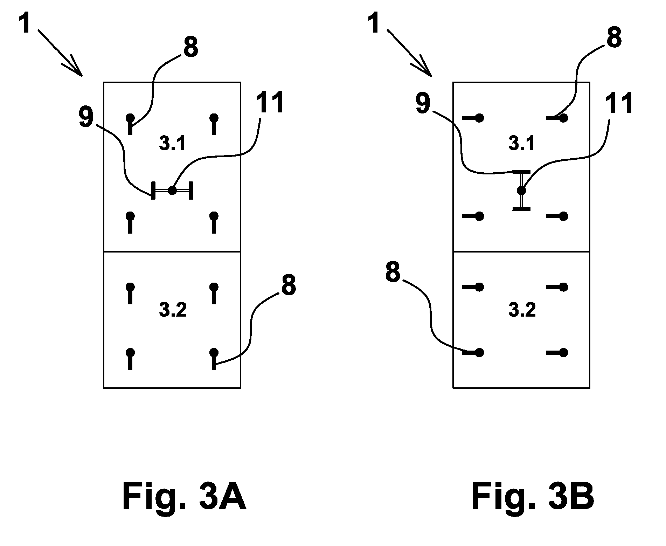

In Fig. 3 appears a transport system 1 depicted in two different situations, namely in Fig. 3A with the wheels in position for driving in longitudinal direction of the transport system, and in Fig. 3B with the wheels in position for driving in transverse direction of the transport system.

The shown transport system 1 is composed of a first transport unit 3.1 and a second transport unit 3.2. These are rigidly coupled by a not shown coupling device. Both of the shown transport units 3 are provided with swivelling wheels 8. In the shown embodiment, the drive unit 2 itself is permanently mounted under the first transport unit 3.1, including a set of wheels 9 which typically is provided with differential and thus allowing the transport system 1 to be controlled during driving. The shown transport system, however, has the further advantage that the wheel set 9 itself may be turned about a vertical axis 11, as shown in Fig. 3B, and therefore the entire transport system can be moved immediately in a transverse direction. As it appears from Fig. 3B, a 90° turning of the wheel set 9 entails that the swivelling wheels are turned, thereby allowing the transport units 3.1 and 3.2 to be moved transversely of the primary driving direction.

Operating a transport system and a drive unit as shown in Fig. 3 is effected advantageously via not shown operating means, which are typically arranged at one end of the transport system.

The variant shown in Fig. 3 may obviously be used in connection with a drive unit as shown in Figs. 1 and 2, and may very well be implemented on a drive unit which is coupled to a loose transport unit.

## Claims

1. A transport system including a drive unit with motor for use in connnection with transporting units with one or more freely movable wheels, where these transport units are either coupled to the drive unit via a coupling system or where the drive unit is permanently mounted on a transport unit, and where the drive unit has at least one drive wheel, **characterised in that** the transport system includes at least one drive unit and at least one, preferably a plurality of transport units, where the at least one drive wheel of the drive unit is provided under the transport unit, preferably close to or under the centre of the transport unit.

2. Transport system according to claim 1, **characterised in that** the transport system is constituted by a drive unit, and that the transport unit is a hospital bed, a linen trolley, a food trolley, a mail cart, cleaning cart or another kind of transport vehicle.

3. Transport system according to claim 1 and 2, **characterised in that** drive unit and transport unit are provided with a corresponding coupling system.

4. Transport system according to any of claims 1 -3, **characterised in that** drive unit and transport unit only include one or more drive wheels, preferably a wheel set with differential gear and one or more freely movable wheels, where the drive wheel or wheels may turn about a substantially vertical axis by an angle more than 45° and preferably at least 90°.

5. A drive unit with motor for use in connnection with transporting one or more units with one or more freely movable wheels, where at least one of these transport units are coupled to the drive unit, and where the drive unit has at least one and preferably two drive wheels, **characterised in that** the drive unit has at least one set of drive wheels with integrated differential gear at the part of the drive unit placed under the transport unit.

6. Drive unit according to claim 5, **characterised in that** the set of drive wheels of the drive unit is provided with an electric differential.

7. Drive unit according to claim 5, **characterised in that** the set of drive wheels of the drive unit is provided with a mechanical differential.

8. Drive unit according to any of claims 5 - 7, **characterised in that** the set of drive wheels of the drive unit can be mechanically and/or electrically turned about a substantially vertical axis by an angle more than 45° and preferably by an angle up to 90° or more.

9. Drive unit according to any of claims 5 - 8, **characterised in that** the drive unit is adapted to transport units that are different in structure, where this device includes a coupling system adapted to be coupled together with differently structured units.

10. Drive unit according to any of claims 5 -9, **characterised in that** the drive unit is provided with a coupling system which may be operated from a control handle, where the coupling is e.g. electromagnetic, a snap-action coupling, a hook coupling, a ball coupling, a drawbolt/draweye coupling, or similar.
